# EUROPEAN PATENT APPLICATION

(11) **EP 4 807 674 A1**
(43) Date of publication of application: **16.09.2026**
(21) Application number: 25163839.1
(22) Date of filing: 14.03.2025
(51) Int. Cl.: G06T 7/13, G06T 7/136

(54) **METHOD AND SYSTEM FOR DETERMINING A GEOMETRIC ELEMENT ESTIMATE IN AN IMAGE**

(71) Applicant: Carl Zeiss IQS Software R&D Center Sp. z o.o., 76-200 Slupsk (PL)
(72) Inventor: Grucelski, Arek, 81-451 Gdynia (PL); Mankowski, Vojtech, 81-451 Gdynia (PL)
(74) Representative: Ramrath, Lukas

(57) **Abstract**

The invention relates to a method and system for determining a resulting estimate (A_ESTres) of a geometric element in an image, comprising the steps of:
a) receiving an image signal (IS) encoding the image,
b) performing an edge detection in the image and determining an image-specific edge point set (LAMBDA_0),
c) defining a region of interest (ROll, ROI2) in the image and determining a ROI-specific edge point set (LAMBDA_ROI), wherein the ROI-specific edge point set (LAMBDA_ROI) is a subset of the image-specific edge point set (LAMBDA_0),
d) selecting a number of points from the ROI-specific edge point set (LAMBDA_ROI) and determining an initial estimate (A_EST1) of the geometric element as a function of said points,
e) selecting all points from the ROI-specific edge point set (LAMBDA_ROI) being arranged in a surrounding of the initial estimate (A_EST1) as elements of a ROI-specific inlier set (LAMBDA_A_EST1+SD_input), wherein a distance between each point of the ROI-specific inlier (LAMBDA_A_EST1+SD_input) set to the initial estimate (A_EST1) is smaller than a predetermined threshold value,
f) selecting a number of points from the ROI-specific inlier set (LAMBDA_A_EST1+SD_input) and determining a first updated estimate (A_EST2) of the geometric element as a function of said points,
g) selecting all points from the image-specific edge point set (LAMBDA_0) being arranged in a surrounding of the first updated estimate (A_EST2) as elements of an image-specific inlier set (LAMBDA_A_EST2+SD_input), wherein a distance between each point of the image-specific edge point set (LAMBDA_A_EST2+SD_input) to the first updated estimate (A_EST2) is smaller than a predetermined threshold value,
h) repeat steps d) to g). until a termination criterion is fulfilled.
i) determining the resulting estimate (A_ESTres) as a function of the image-specific inlier set (LAMBDA_A_EST2+SD_input).

## Description

The invention relates to a method and system for determining a geometric element estimate in an image.

The detection or segmentation of geometric elements in an image, e.g. a line segment detection, is an important problem in computer vision and image processing. It involves identifying the segments in an image and can be useful in a variety of applications, such as object detection, tracking, and image registration.

An exemplary method is presented by the document Rafael Grompone von Gioi, Jeremie Jakubowicz, Jean-Michel Morel, Gregory Randall, LSD: a Line Segment Detector, Image Processing On Line, 2 (2012), pp. 35-55. https://doi.org/10.5201/ipol.2012.gjmr-Isd. The presented method can be described as a line segment detector on a densely packed image. The method utilizes a mathematical method to track so called false guesses with a use of statistical characteristics calculated on a whole image. For applications in metrology software, the described method has some drawbacks. One drawback is that the method does not contain a way to provide a starting point for the detection. The nature of the method also leads to the fact that proper and valid linear segments are not detected. Further, false guesses are complicated to detect and the usability in particular on high quality images is low.

Further known is US 11,854,173 B2 which discloses a system and method for finding multiple line features in an image.

There is the technical problem of providing a system and a method for determining a geometric element estimate in an image which allow a computationally fast, computationally efficient, accurate and robust determination of the geometric element.

The solution to said technical problem is provided by the subject-matter with the features of the independent claims. Further embodiments of the invention are provided by the subject-matter with the features of the dependent claims.

A method for determining a resulting estimate of a geometric element in an image is proposed. The geometric element can be a line or a line segment. However, the geometric element can have any predetermined geometric shape, e.g. also a curved shape.

Determining a resulting estimate can be a determination of parameters of a parametrized model of the geometric element, e.g. parameters of a line equation. Further and in particular if a segment-wise determination is performed, the start and end point (coordinates) of a segment can be determined.

The method comprises a number of steps which can be performed sequentially.

In a receiving step, an image signal encoding the image is received, in particular by an evaluation unit. The image can be generated by an image capturing device such as a camera, e.g. a 2D- or 3D-camera. The camera can be a CMOS- or a CCD-camera.

In an edge detection step, an edge detection in the image is performed and an image-specific edge point set is determined. Edge detection can be performed by applying an edge detection method to the received image such as a Canny edge detector. The points of the image-specific edge point set provide input values for the following steps.

In a definition step, a region of interest is defined in the image and a region-of-interest-specific edge point set (ROI-specific edge point set) is determined, wherein the ROI-specific edge point set is a subset of the image-specific edge point set. The ROI denotes a sub-area in the image. The ROI can have a predetermined or a user-defined shape, preferably a rectangular shape. The ROI can also have predetermined or user-defined size, i.e. a predetermined width and height. As will be explained later, the size can be adjusted while the method is being carried out. The position of the ROI in the image can also be predetermined or user-defined. In case of a user definition, the corresponding parameter can be provided by a user input, in particular via a human machine interface means such as a touchscreen, a mouse, a keyboard etc.

In a first selection step, a number of points (preferably along with their pixel coordinates) is selected from the ROI-specific edge point set and an initial estimate of the geometric element is determined as a function of said points. The points are preferably selected randomly. The random selection process can e.g. use a seed based on a hardware clock of the aforementioned evaluation unit to ensure randomness. The number can be a predetermined or a user-defined number. As will be explained later, the number can be adjusted while the method is being carried out. Determining an estimate can be performed by determining characteristics of a geometric element for which the geometric element is a best fit to the selected points. Determining the estimate can be performed by executing an element discrimination method such as a RANSAC method using a model of the geometric element to be determined. In such a determination, a cost function depending on a distance between the selected points and the geometric element to be fitted is minimized by varying parameters of the geometric element such as a position and/or orientation in the image.

In a second selection step, all points from the ROI-specific edge point set being arranged in a surrounding of the initial estimate are selected as elements of a ROI-specific inlier set. The elements of said inlier set are determined as the points for which a distance between the respective point and the initial estimate is smaller than a predetermined threshold value. The threshold value used in the second selection step can be a predetermined or a user-defined threshold value. In particular, said threshold can be an input parameter for the proposed method.

In a third selection step, a number of points (preferably along with their pixel coordinates) is selected from the ROI-specific inlier set and a first updated estimate of the geometric element is determined as a function of said points. As in the first selection step, the points can be selected randomly. The first updated estimate is determined in the same way as the initial estimate. Therefore, it is referred to the explanations with respect to the first selection step.

In a fourth selection step, all points from the image-specific edge point set being arranged in a surrounding of the first updated estimate are selected as elements of an image-specific inlier set. The elements of said inlier set are determined as the points for which a distance between the respective point and the first updated estimate is smaller than a predetermined threshold value. Again, the threshold value used in the fourth selection step can be a predetermined or a user-defined threshold value. In particular, said threshold can be an input parameter for the proposed method. The threshold value used in the fourth selection step can be equal to or different from the threshold value used in the second selection step.

Then, the sequence of first selection step, second selection step, third selection step, and the fourth selection step is repeated until a termination criterion is fulfilled. Said sequence can therefore also be referred to as inner loop which is executed until the termination criterion is fulfilled. An exemplary termination criterion is if the number of repetitions reaches a predetermined threshold value. Further termination criteria will be explained in the following. In the first selection step of a subsequent execution of the inner loop, points different from the points selected in the first selection step of a current execution of the inner loop can be selected.

After the termination criterion is fulfilled, the resulting estimate as a function of the image-specific inlier set is determined in a determination step. One example is to select a number of points or even all points from the image-specific inlier set and to determine the resulting estimate of the geometric element as a function of said points. Another alternative is outlined in the following.

The number of selected points in the first and in the third selection step can vary. Preferably, the number of points in the third selection step is higher than the number of points in the first selection step.

The proposed method advantageously allows a computationally fast, computationally efficient, accurate and robust determination of the geometric element in an image.

In a further embodiment, a counter variable is set to 0 before the first selection step, wherein the counter value is incremented if the image-specific inlier set determined in the fourth selection step is equal to the previously determined image-specific inlier set, i.e. the image-specific inlier set determined in the previous run of the inner loop. If the number of points of the image-specific inlier set is higher than the number of points in the previously determined image-specific inlier set, the counter value can be set to 0. The termination criterion is fulfilled if the counter value reaches a predetermined threshold value. Alternatively, the termination criterion is fulfilled if a first smoothness criterion is fulfilled. This advantageously ensures an accurate and robust determination of the geometric element.

In a further embodiment, the first smoothness criterion is fulfilled if a deviation measure representing the deviation of the points of the image-specific inlier set from the resulting estimate is smaller than a threshold value. Again, the threshold value used for evaluating the smoothness criterion can be a predetermined or a user-defined threshold value. This advantageously ensures an accurate and computationally efficient determination of the geometric element.

In a further embodiment, the method further comprises a sixth selection step comprising the selection of all points from the image-specific edge point set being arranged in a surrounding of a second updated estimate as elements of an updated image-specific inlier set. As in the second and the fourth selection step, a point of the image-specific edge point set is selected as an element of the updated image-specific inlier set if a distance between the respective point to the second updated estimate is smaller than a predetermined threshold value, wherein said threshold value is higher than the predetermined threshold value used in fourth selection step.

The second updated estimate can be determined by selecting a number of points or all points of the image-specific inlier set determined in the fourth selection step, wherein the second updated estimate of the geometric element is determined as a function of said points, e.g. as explained with reference to the first and third selection step. Then, the resulting estimate of the geometric element can be determined as a function of all or selected points of the updated image-specific inlier set, e.g. as explained with reference to the first and third selection step.

This advantageously increases an accuracy of the determination of the geometric element.

In a further embodiment, a continuity check is performed on the image-specific inlier set, wherein the resulting estimate is determined. The continuity check can be performed after or during the resulting estimate is determined as a function of the image-specific inlier set and in particular if an estimate of a geometric element segment is determined by the proposed method.

An input to the continuity check can be provided by the image-specific inlier set. In a first sub step of the continuity check, a starting point can be selected from this set, e.g. automatically or by a user interaction such as clicking a point in an image displaying the image-specific inlier set using a mouse. In a second sub step, a point-specific distance is determined for each point of the image-specific inlier set. One example to determine the point-specific distance is to determine a projected point and to then determine its distance from a projected starting point, wherein a projected point is a point projected to an, preferably unbounded, estimate of the geometric element. Said estimate can be determined based on the elements of the image-specific inlier set as outlined above. The projection can be a projection along a line which intersects the respective point of the image-specific inlier set and the estimate of the geometric element and is oriented perpendicular to the estimate in the respective point of intersection with the geometric element. The distance can be an image-based distance, e.g. a taxicab distance, and is preferably determined along the estimate. In a third sub step, the distances are then sorted according to their value, e.g. in form of a sorted array or list. The sorting can be signed. In a fourth sub step, the distance differences between neighboring distances in the sorting is determined, in particular sequentially. A starting distance value for the sequence can be the distance of the starting point, i.e. a zero distance entry of the sorting, or the smallest distance in the sorting in terms of amount. In case of a signed sorting, negative and positive distances can provide two different partially sorted containers (data containers) which can be evaluated separately. If a distance difference between neighboring distances in the sorting is smaller than or equal to a predetermined threshold value, the point to which this distance relates is considered a point of a continuous subset of the image-specific inlier set. If a distance difference between neighboring distances in the sorting is higher than the predetermined threshold value, the point to which this distance relates is not considered a point of a continuous subset of the image-specific inlier set. The resulting estimate, in particular along with a start and end point, is then determined as a function of the continuous subset image-specific inlier set. This systematic approach allows for an efficient determination of the continuity of a segment, ensuring that only segments with acceptable proximity are considered valid.

In a further embodiment, the ROI is determined as a function of a selected image point, wherein the image point is selected automatically or based on user input. A user input can be provided by the aforementioned human machine interface means. An automatic selection can be an image quality-based selection. It is e.g. possible to determine a sub-area of the image which fulfills a predetermined image quality-related criterion, e.g. a image contrast-related criterion, and to then select a reference point of said sub-area, e.g. the center point. The ROI can also be selected such that the number of edge points in the ROI is higher than a predetermined threshold value. The such selected image point can provide a reference point of the ROI, e.g. a center point or a corner point. The proposed determination of the ROI advantageously provides an easy-to-implement and easy-to-control method for determining the geometric element.

In a further embodiment, at least the sequence of definition step, the first to the fourth selection step along with a possible a repetition of this sequence, i.e. the inner loop, and the determination step is repeated with a different size of the ROI. This can be referred to as outer loop which can also be executed multiple times. The repetition, i.e. the outer loop, is executed with differently sized ROI until a termination criterion is fulfilled. An exemplary termination criterion is if the number of repetitions reaches a predetermined threshold value, e.g. a number of 2, 3 or 4. In each run of the outer loop, a differently sized ROI can be used. Preferably, the size of the ROI is increased from run to run, e.g. to a predetermined run-specific size or by a predetermined factor. This advantageously increases an accuracy and robustness of the proposed determination.

If multiple runs of the outer loop are executed, the resulting estimate of the geometric element or the previous run (which is provided at the termination of the aforementioned inner loop executed in said previous run of the outer loop) can be stored as a run-specific resulting estimate, e.g. in a memory unit. After the outer loop is terminated, the resulting estimate can be selected from all the stored run-specific resulting estimates, e.g. as the resulting estimate that best fulfills the aforementioned first and/or a further smoothness criterion and/or a point number criterion (which are explained in the following). It is, however, possible that a run of the inner loop does not provide or return a resulting estimate, e.g. if the aforementioned number of repetitions reaches a predetermined threshold value but the smoothness criterion is not fulfilled. In this case, no run-specific resulting estimate can be stored.

In a further embodiment, the repetition, i.e. the outer loop, of the aforementioned sequence, i.e. the inner loop, is terminated if a further smoothness criterion is fulfilled and/or if a point number criterion is fulfilled. An exemplary smoothness criterion has been explained before, namely the first smoothness criterion. It is, however, also possible to apply a smoothness criterion which is different from the first smoothness criterion as a further smoothness criterion. The point number criterion relates to the number of edge points in an acceptable surrounding of the (run-specific) resulting estimate. This advantageously provides a robust and accurate determination of the resulting estimate.

If the further smoothness criterion and/or the point number criterion is not fulfilled, the resulting estimate can be disregarded. If the further smoothness criterion and/or the point number criterion is not fulfilled for the resulting estimate determined in the last run of the outer loop, an error signal can be generated and transmitted to a human machine interface means which outputs a corresponding information to a user.

In a further embodiment, the further smoothness criterion is fulfilled if a deviation measure representing the deviation of the points of the image-specific inlier set from the resulting estimate is smaller than a threshold value. This advantageously increases an accuracy of the proposed determination.

In a preferred embodiment, the deviation measure is a median absolute deviation. It is e.g. possible to determine a point-specific deviation for each point in the image-specific inlier set and to determine the median absolute deviation from said plurality of point-specific deviations. This advantageously provides an easy-to-implement evaluation of the smoothness criterion.

Alternatively or in addition, the threshold value is determined as a function of a ROI-size. It is in particular possible to use a predetermined assignment of ROI sizes to threshold values to determine the threshold value for a given ROI-size. Alternatively, the threshold value can be determined by evaluating a function, e.g. a function which correlates a size of the ROI to the magnitude of the threshold value. Preferably, such a function or assignment can be selected such that an increasing ROI size will provide an increasing threshold value. Further, the threshold value can also be determined as a function of the distance used to determine the image-specific inlier set, e.g. in the fourth or in the sixth selection step. This advantageously increases an accuracy and robustness of the proposed geometric element determination.

In a further embodiment, the point number criterion is fulfilled if the number of points in the ROI-specific inlier set is larger than a threshold number. The threshold number can be a predetermined or user-defined number. It can also be determined as a function of the ROI-size. It is in particular possible to use a predetermined assignment of ROI sizes to threshold numbers to determine the threshold number for a given ROI-size. Alternatively, the threshold number can be determined by evaluating a function, e.g. a function which correlates a size of the ROI to the magnitude of the threshold number. Preferably, such a function or assignment can be selected such that an increasing ROI size will provide an increasing threshold number. This advantageously increases an accuracy and robustness of the proposed geometric element determination.

In a further embodiment, the smoothness criterion and/or the point number criterion depends on the size of the region of interest. This and corresponding advantages have been explained before.

In a preferred embodiment, the geometric element is a line. In this case, line parameters such as an (y-)axis intercept and a gradient can be determined by the proposed method. This advantageously allows to accurately and robustly identify line segments in an image which is desired in many applications, in particular metrology-related applications.

In a further embodiment, at least one of the following parameters is set by a user or automatically:
a) a deviation or distance defining parameter,
b) a threshold value,
c) a size of the ROI,
d) a position of the ROI,
e) a parameter defining a size of an updated subsequent region of interest.

A deviation defining parameter can e.g. represent the deviation used to evaluate an increment of the counter value or to evaluate the smoothness criterion. The deviation defining parameter can be a predetermined value, a user-defined value or it can be determined as a function of image characteristics such as image noise, e.g. a function of a measure representing the noise level in the image.

A distance defining parameter can e.g. represent the distance used for the determination of an inlier set.

A threshold value can be any of the threshold values described in this disclosure, e.g. a threshold value for the counter value.

A size of the ROI can be a pixel size, e.g. a width and/or a height of a rectangular ROI.

A position of the can be provided by a pixel coordinate of a reference point of the ROI such as a center point or edge point.
A parameter defining a size of an updated subsequent region of interest can e.g. be a multiplication factor by which the size of the ROI used in the previous run of the outer loop is multiplied to define the size of the ROI to be used in the current run.

One or more of the abovementioned parameters can be determined, in particular updated, in a run-specific manner. As explained before, a parameter used in a current run (of the inner loop or the outer loop) can be determined as a function of the parameter used in the previous run. For the first run of the inner loop and/or the outer loop, a predetermined or user-defined parameter can be used.

This advantageously allows an easy implementation of the proposed method.

Further proposed is a system for determining a geometric element estimate in an image, wherein the system comprises at least one evaluation unit, wherein the system, in particular the evaluation unit, comprises at least one interface for receiving an image signal encoding an image and at least one interface for outputting information on a geometric element estimate, wherein the system is configured to perform a method according to one of the embodiments described in this disclosure. The evaluation unit can be designed as or comprise a calculation unit such as a microcontroller or an integrated circuit. The system can further comprise image acquisition means such as an image capturing device. This system advantageously allows to perform the proposed method with the aforementioned advantages.

The system can be part of a coordinate measuring device, in particular a optical coordinate measuring device, wherein the image acquisition means is used to measure an object and the resulting estimate is used to determine information on the geometry and/or dimensions of the measured objects or parts/features thereof.

Experiments have shown that the proposed algorithm is a solution for a geometric element detection that proofs to be efficient, accurate, and robust to noise and other image artifacts. Additionally, the method is based on edge points only and does not need contour related information.

The invention will be described with reference to the attached figures. The figures show:
- Fig. 1: a flow chart of a method for determining a line element according to the invention,
- Fig. 2: edge points detected in an image along with a region of interest,
- Fig. 3: an initial estimate of a line element which is determined as a function of selected edge points,
- Fig. 4: edge points detected in an image along with two regions of interest,
- Fig. 5: a resulting estimate of a line element which is determined as a function selected edge points.

In the following, the same reference numerals denote elements with the same or similar features.

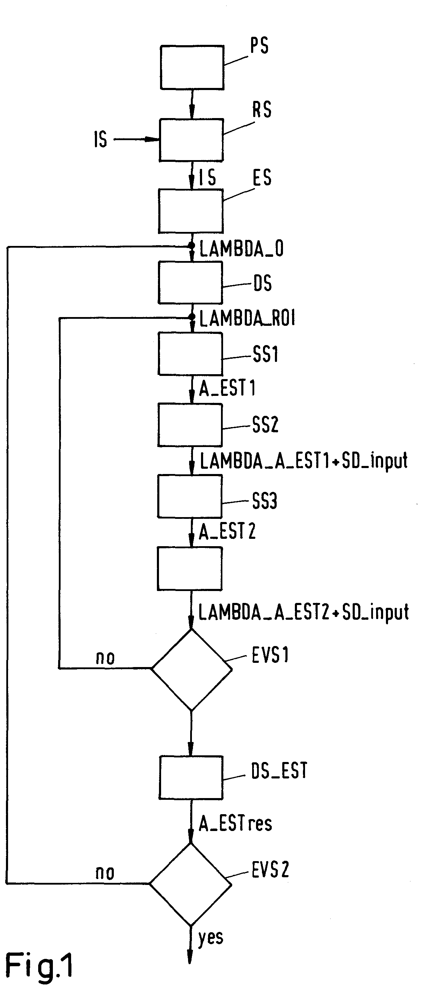

Figure 1 shows a simplified flow chart of the proposed method for determining a line element in an image.

In a pre-processing step PS, input variables for the method are set comprising a standard deviation SD_input, a maximum number of inner loop iterations, run-specific sizes a0, a1, a2 of the ROI for different runs of an outer loop with a0 denoting the size of the ROI in the first run, a1 the size of the ROI in the second run and a2 the size of the ROI in the third run and a reference point X0 of the ROI. The standard deviation SD_input, the maximum number of inner loop iterations, the run-specific ROI-size of the first run can be fixed and predetermined values. The run-specific ROI-sizes of the further runs a1, a2 can be determined based on fixed and predetermined multiplication factors by which the run-specific ROI size of the first run is multiplied. Such factors can e.g. by 5 for the run-specific ROI-size of the second run and 10 for the run-specific ROI-size of the third run. The reference point X0 can be determined by a user selection, e.g. using a human machine interface means, or as the nearest edge point (of the set of the detected edge points in the image) to such a user-selected point. The selection can be performed by clicking on the respective point in the image displayed on a display using e.g. a mouse.

In a receiving step RS, an image signal IS encoding an image to be analyzed is received. In an edge detection step ES, an edge detection is performed on the image encoded by the image signal IS. The result of the edge detection step ES is an image-specific edge point set LAMBDA_0. In a defining step DS_ROI, a ROI is defined in the image, e.g. a ROI with the run-specific ROI size a0 for the first run of an inner loop with the reference point X0 being the center point of the ROI. Further, a ROI-specific edge point set LAMBDA_ROI, is determined wherein the ROI-specific edge point set LAMBDA_ROI is a subset of the image-specific edge point set LAMBDA_0. Further, any stored information on a line estimate can be deleted and a counter variable n_stop is set to zero.

In a first selection step SS1, a predetermined number of points, e.g. 2 or more, preferably 5, points are randomly selected from the ROI-specific edge point set LAMBDA_ROI and an initial estimate A_EST of the geometric element is determined as a function of said points, e.g. using a RANSAC algorithm.

In a second selection step SS2, all points from the ROI-specific edge point set LAMBDA_ROI being arranged in a surrounding of the initial estimate A_EST1 are selected as elements of a ROI-specific inlier set LAMBDA_A_EST1+SD_input, wherein a distance between each point of the ROI-specific inlier set LAMBDA_A_EST1+SD_input to the initial line estimate A_EST1 is smaller than a predetermined threshold value, wherein the threshold value is determined as the standard deviation SD_input or depending thereon.

In a third selection step SS3, a predetermined number of points, e.g. 2 or more, preferably 5, is randomly selected from the ROI-specific inlier set LAMBDA_A_EST1+SD_input and the initial estimate A_EST1 is updated or replaced by a first updated line estimate A_EST2 as a function of said points.

In a fourth selection step SS4, all points from the image-specific edge point set LAMBDA_0 being arranged in a surrounding of the first updated estimate A_EST2 are selected as elements of an image-specific inlier set LAMBDA_A_EST2+SD_input, wherein a distance between each point of the image-specific edge point set LAMBDA_0 to the first updated estimate A_EST2 is smaller than a predetermined threshold value, wherein the threshold value is determined as the standard deviation SD_input or depending thereon.

In the n-th run of the inner loop (with n being larger than 1), it is possible that the counter value n_stop is incremented if the image-specific inlier set LAMBDA_A_EST2+SD_input is equal to the previously determined image-specific inlier set (which can be stored) in memory unit. If the image-specific inlier set LAMBDA_A_EST2+SD_input is larger than the previously determined image-specific inlier set, the counter value n_stop can be zeroed.

The sequence of steps SS1, SS2, SS3, SS4 provide steps of an inner loop, wherein said inner loop can be repeated until a termination criterion is fulfilled. The termination criterion is evaluated in a first evaluation step EVS1 which can be executed after the fourth selection step SS4. The termination criterion can be fulfilled if at least one of the following conditions is fulfilled:
- a number of runs of the inner loop reaches a predetermined number of runs, the predetermined number being equal to 1 or preferably to a number higher than 1,
- the counter value n_stop reaches a predetermined threshold value, e.g. a number of 4,
- a first smoothness criterion is fulfilled.

The first smoothness criterion is fulfilled if a deviation measure representing the deviation of the points of the image-specific inlier set LAMBDA_A_EST2+SD_input from the resulting estimate A_ESTres is smaller than a threshold value, e.g. if $MAD \left(A_ESTres\right) < \left|SD_input\right| \times \left(ax/a0\right)$ wherein MAD denotes a median absolute deviation and ax the x-th ROI size and a0 the initial ROI size, i.e. of the first run. If a line estimate is described as f x+gy+h = 0, than the distance of point x = (xi, yi) can be presented as d(A_EST, SD_input) = |fxi+gyi+h|/sqrt(f^2+g^2) and the median of distances can be described with d_median(A_EST, SD_input). Then, the median absolute deviation MAD can be defined as MAD(A_EST+SD_input) = median(|d_median - d|) on every x being an element of A_EST+SD_input.

If the termination criterion is fulfilled, a determination step DS_EST can be executed to determine the resulting line estimate A_ESTres. This can involve determining a second updated estimate and an updated image-specific inlier set, wherein a distance between each point of the updated image-specific inlier set to the second updated estimate is smaller than a predetermined threshold value being higher than the predetermined threshold value used in fourth selection step SS4. The second updated line estimate can be determined by randomly selecting a number of points, e.g. 2 or more, preferably 5, from the image-specific inlier set LAMBDA_A_EST2+SD_input determined in the fourth selection step SS4 and by determining the second updated line estimate as a function of said points as explained before. This resulting line estimate A_ESTres can be determined as a function of selected or all points of the updated image-specific inlier set as explained before. It can be stored, e.g. in a memory unit.

In an outer loop which can be repeatedly executed, the sequence of the detection step DS, the inner loop and the determination step DS_EST can be executed with a differently sized ROI. For a subsequent run of said outer loop, the run-specific ROI size can be determined as a predetermined ROI size a1, a2 (see above) or by multiplying the run-specific ROI size a0 of the first run of the outer loop by a run-specific factor (see above).

The outer loop can be terminated if a further smoothness criterion is fulfilled and/or if a point number criterion is fulfilled and/or if a predetermined number of runs is reached. The termination criterion is evaluated in a second evaluation step EVS2 which can be executed after the determination step DS_EST. The further smoothness criterion is fulfilled if a deviation measure representing the deviation of the points of the image-specific inlier set from the updated resulting estimate A_ESTres is smaller than a threshold value. The point number criterion is fulfilled if the number of points in the ROI-specific inlier set (determined in the second selection step SS2) is larger than a threshold number.

After termination of the outer loop, the current resulting estimate A_ESTres can provide the estimate of the geometric element to be determined by the method, i.e. the output of the method. If the smoothness criterion and/or the point-specific criterion is fulfilled for the resulting estimate A_ESTres, this resulting line estimate A_ESTres can be stored, e.g. in a memory unit. Otherwise, it can be disregarded.

Also, a continuity check can be performed if the termination criterion is fulfilled.

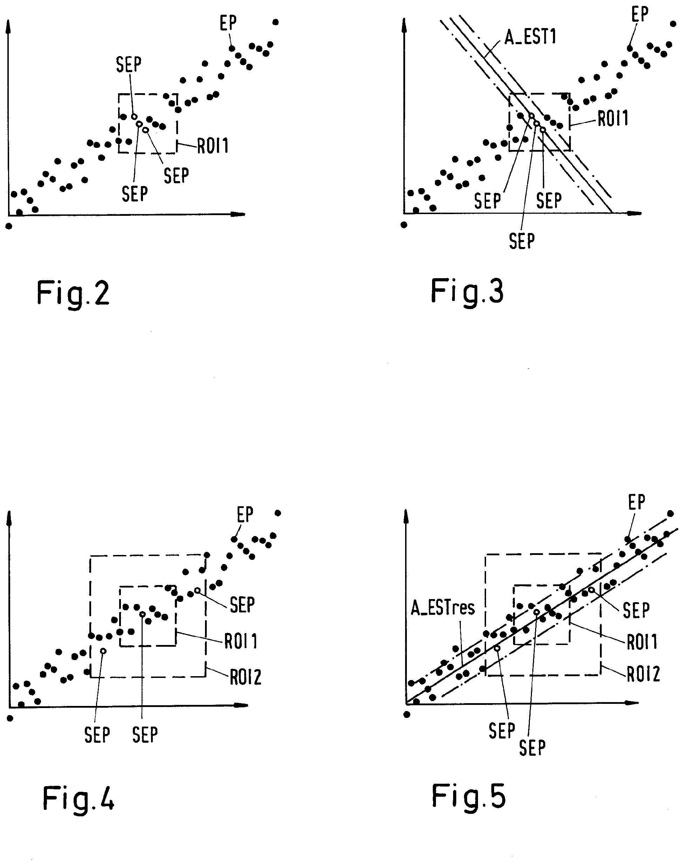

Fig. 2 shows edge points EP detected in an image and an exemplary initial region of interest ROI1. For the sake of simplicity, not all edge points EP are referenced by a reference numeral. The edge points EP provide points of an image-specific edge point set LAMBDA_0 (see Fig. 1). The edge points EP within the initial region of interest ROI1 provide points of a ROI-specific edge point set LAMBDA_ROI (see Fig. 1). Further shown are three selected edge points SEP which have been randomly selected in the first selection step SS1.

Fig. 3 shows an initial estimate A_EST1 of a line element which is determined as a function of said selected edge points SEP. A dashed-point line indicates a surrounding of the initial estimate A_EST1 used to determine the ROI-specific inlier set LAMBDA_A_EST1+SD_input (see Fig. 1). Obviously, this initial estimate A_EST is not a very accurate estimation of the true line segment. To avoid such a not sufficiently accurate result, the method includes the further steps as outlined with respect to figure 1.

Fig. 4 shows edge points EP detected in an image and an exemplary initial region of interest ROI1. Further, a second, larger region of interest ROI2 is shown. For the sake of simplicity, not all edge points EP are referenced by a reference numeral. The edge points EP provide points of an image-specific edge point set LAMBDA_0 (see Fig. 1). The edge points EP within the initial region of interest ROI1 provide points of a ROI-specific edge point set LAMBDA_ROI in a first run of an outer loop (see Fig. 1). The edge points EP within the second region of interest ROI2 provide points of a ROI-specific edge point set LAMBDA_ROI in a second run of an outer loop (see Fig. 1).

Further shown are three selected edge points SEP in the second region of interest ROI2 which have been randomly selected in the first selection step SS1 of the second run of the outer loop and are different from the scenario shown in Fig. 2.

Fig. 5 shows a resulting estimate A_ESTres of a line element which is provided after the last run of the outer loop, e.g. the second run of the outer loop. Obviously, this resulting estimate A_ESTres is a more accurate estimation of the true line segment than the estimation shown in Fig. 3.

## Claims

1. Method for determining a resulting estimate (A_ESTres) of a geometric element in an image, comprising the steps of:
a) receiving an image signal (IS) encoding the image,
b) performing an edge detection in the image and determining an image-specific edge point set (LAMBDA_0),
c) defining a region of interest (ROI1, ROI2) in the image and determining a ROI-specific edge point set (LAMBDA_ROI), wherein the ROI-specific edge point set (LAMBDA_ROI) is a subset of the image-specific edge point set (LAMBDA_0),
d) selecting a number of points from the ROI-specific edge point set (LAMBDA_ROI) and determining an initial estimate (A_EST1) of the geometric element as a function of said points,
e) selecting all points from the ROI-specific edge point set (LAMBDA_ROI) being arranged in a surrounding of the initial estimate (A_EST1) as elements of a ROI-specific inlier set (LAMBDA_A_EST1+SD_input), wherein a distance between each point of the ROI-specific inlier (LAMBDA_A_EST1+SD_input) set to the initial estimate (A_EST1) is smaller than a predetermined threshold value,
f) selecting a number of points from the ROI-specific inlier set (LAMBDA_A_EST1+SD_input) and determining a first updated estimate (A_EST2) of the geometric element as a function of said points,
g) selecting all points from the image-specific edge point set (LAMBDA_0) being arranged in a surrounding of the first updated estimate (A_EST2) as elements of an image-specific inlier set (LAMBDA_A_EST2+SD_input), wherein a distance between each point of the image-specific edge point set (LAMBDA_A_EST2+SD_input) to the first updated estimate (A_EST2) is smaller than a predetermined threshold value,
h) repeat steps d) to g) until a termination criterion is fulfilled.
i) determining the resulting estimate (A_ESTres) as a function of the image-specific inlier set (LAMBDA_A_EST2+SD_input).

2. The method according to claim 1, **characterized in that** a counter variable is set to 0 before step d), wherein the counter value (n_stop) is incremented if the image-specific inlier set (LAMBDA_A_EST2+SD_input) determined in step g) is equal to the previously determined image-specific inlier set (LAMBDA_A_EST2+SD_input), wherein the termination criterion is fulfilled if the counter value (n_stop) reaches a predetermined threshold value or if a first smoothness criterion is fulfilled.

3. The method according to claim 2, **characterized in that** the first smoothness criterion is fulfilled if a deviation measure representing the deviation of the points of the image-specific inlier set (LAMBDA_A_EST2+SD_input) from the first updated estimate (A_ESTres) is smaller than a threshold value.

4. The method according to one of the preceding claims, **characterized in that** the method further comprises the steps of
k) selecting all points from the image-specific edge point set (LAMBDA_0) being arranged in a surrounding of a second updated estimate as elements of an updated image-specific inlier set, wherein a distance between each point of the updated image-specific inlier set to the second updated estimate is smaller than a predetermined threshold value being higher than the predetermined threshold value used in step g),
l) determining the resulting estimate (A_ESTres) of the geometric element as a function of said points.

5. The method according to one of the preceding claims, **characterized in that** a continuity check of the resulting estimate (A_ESTres) is performed.

6. The method according to one of the preceding claims, **characterized in that** the region of interest (ROI1, ROI2) is determined as a function of a selected image point, wherein the image point is selected automatically or based on user input.

7. The method according to any one of the preceding claims, **characterized in that** at least steps c) to i) are repeated with a different size of the region of interest (ROI1, ROI2) until a termination criterion is fulfilled.

8. The method according to claim 7, **characterized in that** repetition of steps c) to i) with differently sized regions of interests (ROI1, ROI2) is terminated if a further smoothness criterion is fulfilled and/or if a point number criterion is fulfilled.

9. The method according to claim 8, **characterized in that** the further smoothness criterion is fulfilled if a deviation measure representing the deviation of the points of the image-specific inlier set (LAMBDA_A_EST2+SD_input) from the resulting estimate (A_ESTres) is smaller than a threshold value.

10. The method according to claim 9, **characterized in that** the deviation measure is a median absolute deviation and/or that the threshold value is determined as a function of a ROI-size.

11. The method according to any of the claims 8 to 10, **characterized in that** the point number criterion is fulfilled if the number of points in the ROI-specific inlier set (LAMBDA_ROI) is larger than a threshold number.

12. The method according to any of the claims 8 to 11, **characterized in that** the smoothness criterion and/or the point number criterion depends on the size of the region of interest (ROI1, ROI2).

13. The method according to one of the preceding claims, **characterized in that** the geometric element is a line element.

14. The method according to one of the preceding claims, **characterized in that** at least one of the following parameters is set by a user or automatically:
a) a deviation defining parameter,
b) a threshold value for the counter value (n_stop),
c) a size of the region of interest (ROI1, ROI2),
d) a position of the region of interest (ROI1, ROI2),
e) a parameter defining a size of an updated subsequent region of interest (ROI2).

15. A system for determining a resulting geometric element estimate (A_ESTres) in an image, wherein the system comprises at least one evaluation unit, wherein the system, in particular the evaluation unit, comprises at least one interface for receiving an image signal (IS) encoding an image and at least one interface for outputting information on the resulting geometric element estimate (A_ESTrest), wherein the system is configured to perform a method according to one of the claims 1 to 14.
